# EUROPEAN PATENT APPLICATION

(11) **EP 1 178 659 A2**
(43) Date of publication of application: **06.02.2002**
(21) Application number: 01500136.5
(22) Date of filing: 31.05.2001
(51) Int. Cl.: H04M 11/02

(54) **Support element of the push button assembly for the plate of an automatic door answering device**

(30) Priority: 02.08.2000 ES 200002060 U
(71) Applicant: Guinaz, S.L., 31350 Peralta (Navarra) (ES)
(72) Inventor: Guindulain Azcona, Alfonso, 31350 Peralta (Navarra) (ES)
(74) Representative: Ungria Lopez, Javier

(57) **Abstract**

Support element of the push button assembly for the plate of an automatic door answering device, being of the type of element forming the outdoor plates that include a series of push buttons with their corresponding apartment identification card holder. The element is basically comprised of a generally U-shaped section front aluminum profile (5) with a series of windows, a plastic body (6) in which some side windows (7) and some center windows (8) longer than the side windows and a rear plate (9) supporting a series of operating elements are defined. The apartment ringing push buttons are housed in the side windows (7) and the apartment identification card holders are housed in the center windows (8). The windows (7) and (8) of the plastic body (6) are in relation to the respective windows of the front profile (5), whereas the body (6) is connected to the front profile (5) by clipping.

## Description

### OBJECT OF THE INVENTION

As expressed in the title of the present specification, the following patent of invention refers to a support element of the push button assembly for the plate of an automatic door answering device, being of the type of element forming the outdoor plates of automatic door answering devices that include a series of push buttons with their corresponding apartment identification card holder, in such a way that the push button support element comprises a sheet according to a generally U-shaped section profile, preferably made of aluminum, to which a plastic body is connected by simply clipping. The plastic body has a series of recesses in which the push buttons are housed and a plate supporting a series of operating components is fastened to the plastic body.

The plate supporting a series of operating components includes some connecting strips of the different apartments, some feed connectors, some gold contacts and some permanent lighting LEDS, the contact being carried out when the push button is pushed by means of a rubber body, the rubber bodies being housed in the different recesses of the plastic body which is fastened to the laminar profile.

### FIELD OF APPLICATION

The push button support element is applicable to all types of outdoor plates of automatic door answering devices, in such a way that the assembly comprising the push button support element is capable of being coupled in order to adapt to all the outdoor plates of the different apartment buildings irrespective of the number of apartments thereof.

### BACKGROUND OF THE INVENTION

Conventionally, the installation of the outdoor plates for automatic door answering devices is adapted to the number of apartments in the apartment building. Among the different models existing on the market, the one formed by a support plate that has an area for the audio unit and another area for the different push buttons and the corresponding card holders can be cited. In this model, if the number of apartments exceeds the number in the support base plate, a second plate, or more support plates of identical dimensions and characteristics is(are) installed. No support plate is mounted in the audio area and hence there is no element in the audio area.

Of course, this embodiment has the inconvenience that the support plates that do not mount the audio area, or the video unit if applicable, have an area where there is no component and hence the base material used to manufacture same exceeds the amount required and this represents a waste.

Furthermore, in general we can say that the different components that form the push buttons and the card holders are mounted with respect to the rear surface of the support plate, the structure thereof acting as a stopping element.

On the other hand, the apartment ringing push buttons are operated mechanically, that is to say, the body that the user presses when ringing the apartment is aided by the action of a spring that impels it to its extreme position and the body is retained by the structure itself of the base plate.

Hence, the body which is pressed when an apartment is rung has a projection that clasps, by one of its ends, an spring that impels it towards the outside, whereas the spring by its other end fits into a projection of the body that acts as a support of the push button assembly, in such a way that the spring itself by its ends ends in respective extensions, the spring being connected by one of its extensions to a connecting terminal and by its other extension, like a pin, it contacts with the conducting element.

In this way, when the push button aided by the spring is pressed, the spring is compressed and the pin in which one of its ends ends contacts with the conducting element and when the push button is no longer pressed the spring recovers its original position and the pin no longer contacts the conducting element.

On the other hand, the push button-card holder assembly includes a lamp socket in which the corresponding light bulb is inserted, the respective contacts being required, in such a way that the assembly of this unit is somewhat complex.

### DESCRIPTION OF THE INVENTION

The present invention describes a support element of the push button assembly for the plate of an automatic door answering device being of the type of element forming the outdoor plates of automatic door answering devices that include a series of push buttons with their corresponding apartment identification card holder. The support element is basically comprised of a generally U-shaped section aluminum front profile which contains a series of windows, an intermediate plastic body in which some side windows and some center windows longer than the side windows and a rear plate are defined. The rear plate supports a series of operating elements and the apartment ringing push buttons are housed in the side windows of the intermediate body and the card holders are housed in the center windows. The windows of the intermediate plastic body are in connection with the respective windows of the front profile and the intermediate body is connected to the front profile by clipping.

On its front surface the rear plate has some gold contacts with respect to the side windows of the intermediate body in which the apartment ringing push buttons and some permanent lighting LEDS are housed, in connection with the center windows of the intermediate body, in which the card holders are housed, whereas on the other surface the rear plate has some feed connectors of the push button elements and an apartment connecting strip.

The push button assembly that is housed in the respective side windows of the intermediate body is defined by a rubber body or the like that carries out the contact with the corresponding gold contact of the rear plate when an apartment is rung. Two bodies are superposed on the front part thereof, in such a way that the front body abuts against the profile.

The card holders are defined by two generally U-shaped bodies that are attached and connect to each other by clipping, the sheet indicating the apartments with respect to the attached push buttons being between the two bodies. The two bodies that define the card holders connect in turn to the intermediate body by simple clipping and the assembly thereof is carried out on the front surface of the profile.

In order to complement the description that is going to be made hereinafter and for the purpose of providing a better understanding of the characteristics of the invention, the present specification is accompanied by a series of drawings, in whose figures the most characteristics details of the invention are represented in an illustrative and non-restrictive manner.

### BRIEF DESCRIPTION OF THE DRAWINGS

Figure 1 shows a perspective view of an outdoor plate of an automatic door answering device, wherein the audio element and the element supporting the push button-card holder assembly are represented.

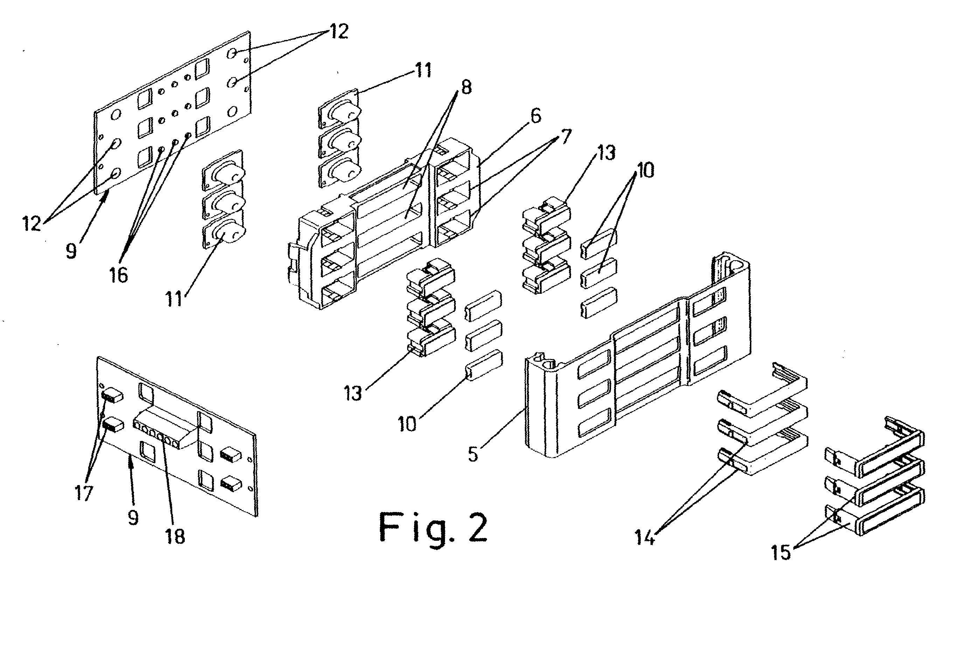

Figure 2 is a perspective view of the element supporting the disassembled push button-card holder assembly wherein all the assembled components can be seen, the contact support plate, the permanent lighting LEDS, the connectors and both surfaces of the strips having been represented.
Figure 3 shows a perspective view of the element supporting the push button-card holder assembly without the front profile in which a cut has been made, with respect to the different components thereof.

### DESCRIPTION OF A PREFERRED EMBODIMENT

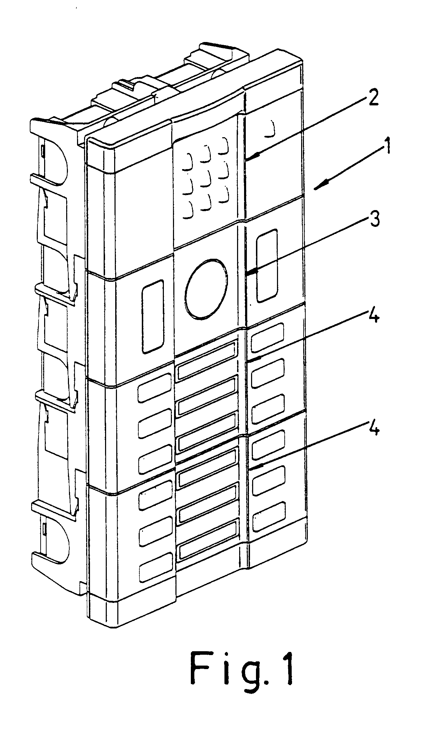

In view of the commented figures and according to the numbering used we can see how figure 1 of the drawings, as an example, shows an outdoor plate (1) of the automatic door answering device comprised of an audio unit (2), a video unit (3) and two push button units (4), in such a way that all the cited audio, video and push buttons units have in the front a generally U-shaped section aluminum profile (5).

Hence, the push button units (4) are comprised of the profile (5), to which a plastic body (6) is connected by simple clipping. Some side windows (7) in which the push buttons are located and other center windows (8) in which the card holders are located are defined in the plastic body. The push button element has a plate (9) with a series of operating components.

In this way, the profile (5) has a series of windows in correspondence with the windows (7) and (8) of the plastic body (6) connected thereto by simple clipping. The respective front body (10) of the push buttons is arranged in relation to the windows and when an apartment is rung the front body of the push buttons and the assembly that houses the apartment identification card holders are pressed respectively.

The assembly of each one of the push buttons which is housed in the corresponding side windows (7) of the plastic body (6), arranged between the front profile (5) and the rear plate (9) that houses the different operating components, is comprised of a rubber body (11) or the like that is housed in the corresponding side window (7) of the body (6) which at its rear part is in connection with the respective gold contact (12) of the rear plate (9) and at its front part there is a part (13) on which the front body (10) is located, the part (13) being connected by simple clipping to the body (6), whereas the front body (10) abuts against the profile itself (5).

With this structure in order to ring an apartment a front body (10) of the corresponding push button will be pressed and this produces the contact with the gold contact (12) and thus the desired apartment will be rung.

Aside from the gold contacts (12), the rear plate (9) includes some feed connectors (17) of the push button element, as well as an apartment connecting strip (18), that facilitates the connecting of the different conducting cables and some permanent lighting LEDS in correspondence with the card holders making these card holders perfectly visible in the dark.

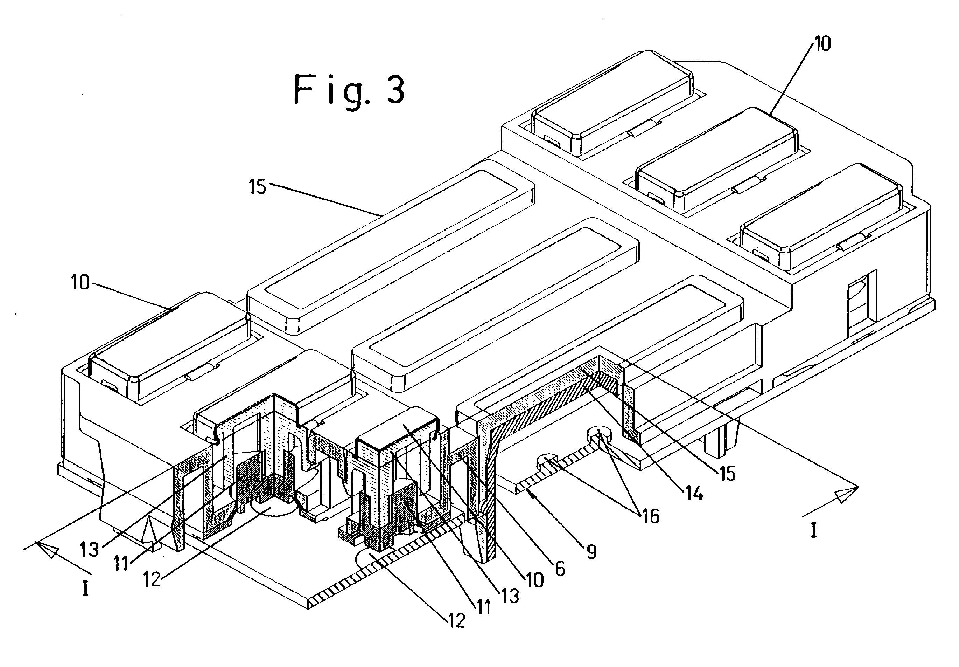

The card holders are comprised of a pair of generally U-shaped bodies (14) and (15) that are attached and connect to each other by simple clipping, bodies which are assembled on the front surface of the plate and they are likewise fastened by simple clipping to the plastic body (6), as it can be seen in figure 3 of the drawings.

In short, we have a push button support element that can be easily and rapidly assembled in the manufacture of the structure itself of its components. This also represents a saving of material, a saving of labor, with the added advantage of having total reliability because it operates electronically and not mechanically.

Furthermore, this element achieves a reduction of the material space in the assembly thereof and this involves a saving of material and, of course, an economic saving, represented by the aluminum profile itself (5).

On the other hand, since the push button elements have three rows of push buttons there is great versatility.

## Claims

1. Support element of the push button assembly for the plate of an automatic door answering device, being of the type of element forming the outdoor plates that include a series of push buttons with their apartment identification card holder, **characterized in that** it basically comprises a generally U-shaped section front aluminum profile (5) with a series of windows, a plastic body (6) in which some side windows (7) and some center windows (8) longer than the side windows and a rear plate (9) supporting a series of operating elements are defined, the apartment ringing push buttons being housed in the side windows (7) and the apartment identification card holders being housed in the center windows (8), the windows (7) and (8) of the plastic body (6) being in relation to the respective windows of the front profile (5), the body (6) being connected to the front profile (5) by clipping.

2. Support element of the push button assembly for the plate of an automatic door answering device according to claim 1 **characterized in that** the rear plate (9) has on its front surface some gold contacts (12) with respect to the side windows (7) of the intermediate body (6) in which the apartment ringing push buttons and some permanent lighting LEDS (16) are housed, in relation to the center windows (8) of the intermediate body (6), in which the card holders are housed, whereas on the rear surface the plate (9) has some feed connectors (17) of the push button elements and an apartment connecting strip (18).

3. Support element of the push button assembly for the plate of an automatic door answering device according to claims 1 and 2, **characterized in that** the push button assembly that is housed in the respective side windows (7) of the body (6) is defined by a rubber body (11) or the like that carries out the contact on the corresponding gold contact (12) when the apartment is rung and the front bodies (13) and (10) that abut against the profile (5) are superposed on the front part.

4. Support element of the push button assembly for the plate of an automatic door answering device according to claim 1, **characterized in that** the card holders are defined by two generally U-shaped bodies (14) and (15) that are attached and connect to each other by clipping, the sheet indicating the apartments of the abutted push buttons being between the two bodies and in turn the two bodies (14) and (15) that define that card holders connecting to the intermediate body (6) by simple clipping, with respect to the front surface of the profile (5).
